# EUROPÄISCHE PATENTSCHRIFT

(11) **EP 1 088 581 B1**
(45) Veröffentlichungstag und Bekanntmachung des Hinweises auf die Patenterteilung: **23.08.2006**
(21) Anmeldenummer: 00120887.5
(22) Anmeldetag: 26.09.2000
(51) Int. Cl.: B01D 29/21, B01D 29/96, B01D 35/12

(54) **Filtervorrichtung mit mindestens zwei Filterkammern**
Filter device with at least two filtration chambers
Dispositif de filtration avec au moins deux chambres de filtration

(30) Priorität: 30.09.1999 DE 19946940
(43) Veröffentlichungstag der Anmeldung: 04.04.2001
(73) Patentinhaber: HYDAC FILTERTECHNIK GMBH, 66280 Sulzbach/Saar (DE)
(72) Erfinder: Cartarius, Karsten, Dipl.-Ing., 66333 Völklingen (DE); Sann, Norbert, 66292 Riegelsberg (DE)
(74) Vertreter: Bartels & Partner

(56) Entgegenhaltungen:
- US-A- 2 489 362
- US-A- 3 900 401
- US-A- 5 073 260
- US-A- 5 443 772

## Beschreibung

Die Erfindung betrifft eine Filtervorrichtung mit mindestens zwei Filterkammern, die jeweils in einer Elementaufnahme aufgenommen ein Filterelement aufweisen und mit einer Umschalteinrichtung zum wahlweisen fluidführenden Verbinden und Trennen der Filterkammern gemäß der Merkmalsausgestaltung des Oberbegriffes des Patentanspruches 1.

Bei den bekannten Filtervorrichtungen, wie sie frei auf dem Markt erhältlich sind und die man auch als Doppelfilter bezeichnet, sind die Filterkammern und die Umschalteinrichtung aus Werkstoffen in Stahlguß, Stahl bzw. Edelstahl gebildet. Als Umschalteinrichtung dient dabei insbesondere eine Kugelümschaltarmatur mit negativer Überdeckung, die die beiden Filterkammern fluidführend miteinander verbinden kann, so daß bei Bedarf beide Filterkammern durchströmt werden. Solche umschaltbaren Filtervorrichtungen sind insbesondere zum Einbau in Rohrleitungen von Hydraulik- und Schmieranlagen vorgesehen, die für einen Filterelementwechsel nicht stillgelegt werden können. Die angesprochenen Komponenten der Doppelfilter werden aus gegossenem oder geschweißtem oder aus Vollmaterial hergestellt, wobei die dahingehende Herstellung nur bei entsprechend großen Stückzahlen wirtschaftlich ist. Sofern für die Herstellung Schweißverfahren eingesetzt werden, sind jedenfalls schweißtechnische Vorschriften zu beachten und gegebenenfalls, insbesondere in sicherheitsrelevanten Bereichen, müssen die Schweißverbindungen technisch überprüft und abgenommen werden. Sofern Gußteile, wie angesprochen, Verwendung finden, sind zunächst kostenintensive Gußformkonstruktionen notwendig und die Herstellung aus Vollmaterialien kommt nur für Sonderanwendungen im Hinblick auf den hohen Kostenaufwand in Frage. Sollen die dahingehenden bekannten Lösungen nach Kundenwünschen von ihrer Größe her anders dimensioniert werden, ist dies nur mit einem erheblichen Änderungs- und Neuerstellungsaufwand möglich.

Bei einer Filtervorrichtung nach der US-A-5 443 722 besteht das Filter aus zwei Komponenten, wobei die Umschalteinrichtung größtenteils in einer der beiden Gehäusekomponenten untergebracht ist. Die beiden Gehäusekomponenten sind dabei über einen Flansch mittels Schraubverbindungen aneinander befestigt. Eine Vorrichtung nach der US-A-2 489 362 offenbart rohrförmige Filterkammern, die mit Schraubmuttern an dem zentralen, die Umschalteinrichtung beinhaltenden Mittelteil befestigt sind. Durch die US-A-3 900 401 sind zwei separate Filterkammern und ein separates, dazwischen angebrachtes Gehäuse mit einer Umschalteinrichtung bekannt. Die Filtergehäuse sind dabei mit senkrecht von oben und unten in das Mittelgehäuse reichenden Schrauben befestigt. Die US-A-5 073 260 offenbart ebenfalls eine Filtrationseinrichtung, deren Filtergehäuse seitlich mittels Schraubverbindungen an die Umschalteinheit angeflanscht sind.

Durch die zuletzt genannten vier Dokumente ist es demgemäß bekannt neben den angeführten Schweißverbindungen in kostengünstiger Weise die Komponenten der Filterkammern und der Umschalteinrichtung mittels Schraubverbindungen zusammenzusetzen, wobei die jeweilige Elementaufnahme über feststehende Abstandshalter, meist in Form von Gehäuseteilen, innerhalb der zugeordneten Filterkammer festgelegt ist. Durch den Einsatz der genannten Schraubverbindungen ist eine variable Anpassung an Kundenwünsche erreichbar und eine kostengünstige Herstellung auch aus Edelstahl möglich und selbst bei geringen Stückzahlen durch die Verwendung möglichst vieler Halbzeuge gewährleistet. Da auf Schweißverbindungen völlig verzichtet werden kann, müssen schweißtechnische Abnahmevorschriften auch nicht eingehalten werden und teure Abnahmeverfahren, insbesondere im Ausland, entfallen. Der Verzicht auf Gußmaterialien lässt auch aufwendige und kostenintensive Formkonstruktionen entfallen. Vielmehr lassen sich alle Komponenten der Filtervorrichtung aus Standardbauteilen mittels konstruktiv einfacher Schraubverbindungen zusammensetzen, wobei in Serie herstellbare Komponenten im Sinne eines modularen Baukastensystems wahlweise nach Kundenvorgaben zusammengesetzt werden.

Ausgehend von diesem Stand der Technik liegt der Erfindung die Aufgabe zugrunde, die auf Schraubverbindungen zurückgehende Filtervorrichtungen unter Beibehalten ihrer genannten Vorteile dahingehend weiter zu verbessern, daß diese noch einfacher und mithin kostengünstig auch bei kleinen Stückzahlen sich an Kundenwünsche anpassen lassen. Eine dahingehende Aufgabe löst eine Filtervorrichtung mit den Merkmalen des Patenanspruches 1 in seiner Gesamtheit.

Dadurch, daß gemäß dem kennzeichnenden Teil des Patentanspruches 1 die Elementaufnahme in der Art einer Einschubplatte als Zwischenboden ausgebildet ist, der gegen den am Filterelement anstehenden Differenzdruck während des Filtrierbetriebes durch Klemmung auf einer Seite mittels des Abstandhalters innerhalb der Filterkammer arretiert ist oder der gegen den Abstandshalter gedrückt ist, ist der bisher beschriebene Aufbau an gattungsgemäßen Filtervorrichtungen noch weiter vereinfacht, da der erfindungsgemäße Zwischenboden nicht mehr an der zuordenbaren Filterkammer anzuschrauben oder anzuschweißen ist, sondern vielmehr kann dieser in der Art einer Einschubplatte in die Filterkammer eingeschoben und mittels des jeweiligen Abstandshalters in seiner Position gehalten werden.

Trotz des konstruktiv einfachen Aufbaues auf der Basis von Wiederholteilen, erfüllt die erfindungsgemäße Filtervorrichtung wie die bekannten aufwendigen Lösungen die hier üblichen technischen Standards, beispielsweise den Standard 614, 3. Edition, August 1992, des Amerikanischen Petroleuminstitutes (API). Dabei gilt die Norm API 614 des VDMA für Schmier-, Sperr- und Regelölversorgungsanlagen für besondere Anwendungsfälle.

Bei einer besonders bevorzugten Ausführungsform der erfindungsgemäßen Filtervorrichtung ist die Hohlschraube in einer Seitenwand der Fluidkammer geführt, die dabei die Umschalteinrichtung an der Filterkammer festlegt und eine Passage für die Fluidführung aufweist. Vorzugsweise ist dabei vorgesehen, daß die Elementaufnahme die jeweilige Filterkammer in zwei Fluidkammern unterteilt und eine fluiddurchlässige Aufnahme für das Filterelement aufweist.

Bei einer weiteren besonders bevorzugten Ausführungsform der erfindungsgemäßen Filtervorrichtung ist in jeder Teilkammer einer jeden Filterkammer mindestens eine Hohlschraube zum Festlegen der Umschalteinrichtung angeordnet. Damit dienen die Hohlschrauben gleichzeitig der Befestigung für die Kugelhähne der Umschalteinrichtung, was zu einer sehr kompakten Bauweise führt, was mit Schweiß- und Gußlösungen nicht erreicht wird, die konstruktionsbedingt mehr Bauraum, beispielsweise für das Anbringen der Schweißverbindungen oder bei der Bemessung von Gußwandungsübergängen, benötigen.

Weitere vorteilhafte Ausführungsformen sind Gegenstand der Unteransprüche.

Im folgenden wird die erfindungsgemäße Filtervorrichtung anhand zweier Ausführungsformen nach den Figuren näher erläutert. Es zeigen dabei in prinzipieller und nicht maßstäblicher Darstellung die
- Fig.1 und 2: im Längsschnitt die beiden verschiedenen Ausführungsformen und die
- Fig.3: eine perspektivische Ansicht auf die teilweise geschnitten dargestellte Hohlschraube nach den Fig.1 und 2.

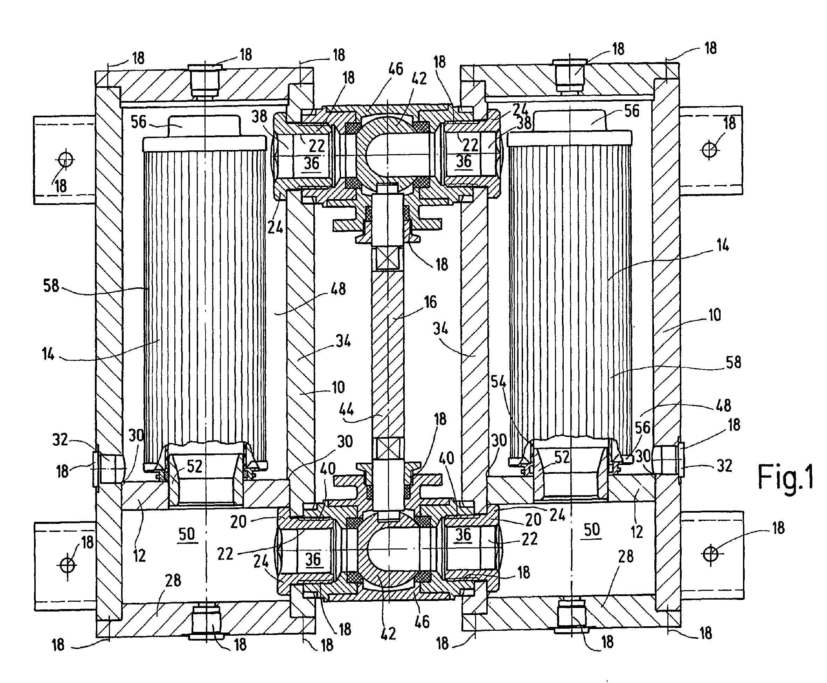

Die Filtervorrichtung nach der Fig.1 weist zwei als Gleichteile ausgebildete Filterkammern 10 auf. Innerhalb der beiden Filterkammern 10 ist von einer Elementaufnahme 12 aufgenommen ein übliches Filterelement 14 für das Filtrieren von Fluid eingesetzt. Zum wahlweisen fluidführenden Verbinden und Trennen der Filterkammern 10 dient eine Umschalteinrichtung 16, die beispielsweise über einen Hebel (nicht dargestellt) von Hand betätigbar ist und die sich zwischen den beiden Filterkammern 10 erstreckt.

Wie die Figuren zeigen, sind die Komponenten der Filterkammern 10 und der Umschalteinrichtung 16 mittels Schraubverbindungen 18 zusammengesetzt, wobei in den Figuren der Einfachheit halber nicht jede Schraube im einzelnen dargestellt ist, sondern vielmehr nur eine Strichdarstelung den Hinweis für die vorzunehmende Verschraubung gibt. Des weiteren ist die jeweilige Elementaufnahme 12 über Abstandshalter 20 innerhalb der zugeordneten Filterkammer 10 festgelegt.

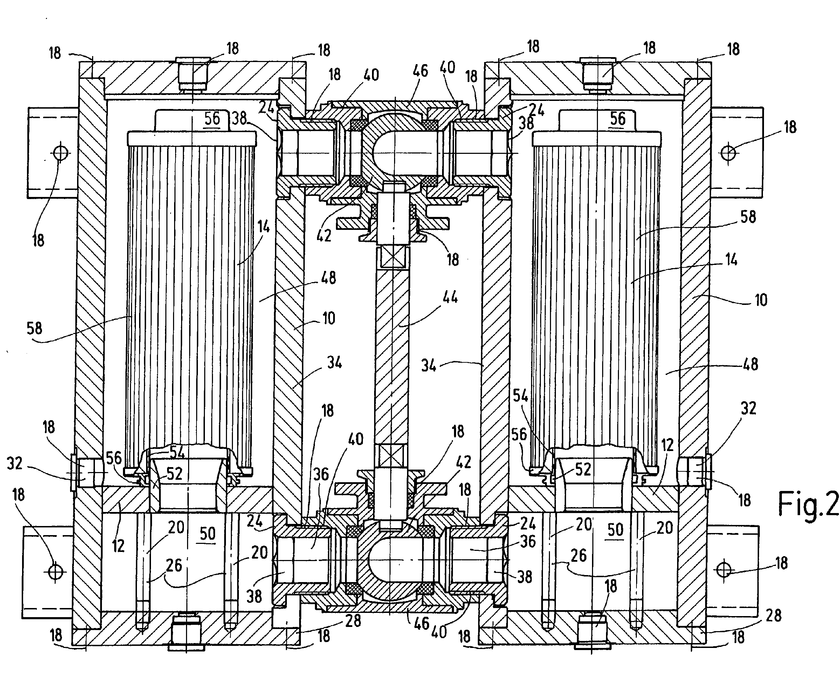

Der Abstandshalter 20 kann, wie in der Fig.1 dargestellt, aus Hohlschrauben 22 mit zylindrischem Schraubenkopf 24 gebildet sein oder aus Haltestäben 26, wie sie Gegenstand der Fig.2 sind, wobei der jeweilige Haltestab 26 bei der vorliegenden Ausführungsform nach der Fig.2 mit Teilen, insbesondere in Form eines Bodenteils 28, mit der Filterkammer 10 fest verbunden ist. Der jeweilige Abstandshalter 20 gemäß der Ausführungsform nach der Fig.1 hält die Elementaufnahme 12 gegen einen Anschlag 30 der Filterkammer 10, wobei der Anschlag 30 unmittelbar durch einen ausgedrehten Absatz innerhalb der Filterkammer 10 gebildet sein kann oder durch einen Abschlußstopfen 32, der die Filterkammerwand an der Stelle der möglichen Anlage unter Bildung eines Anschlages durchdringt.

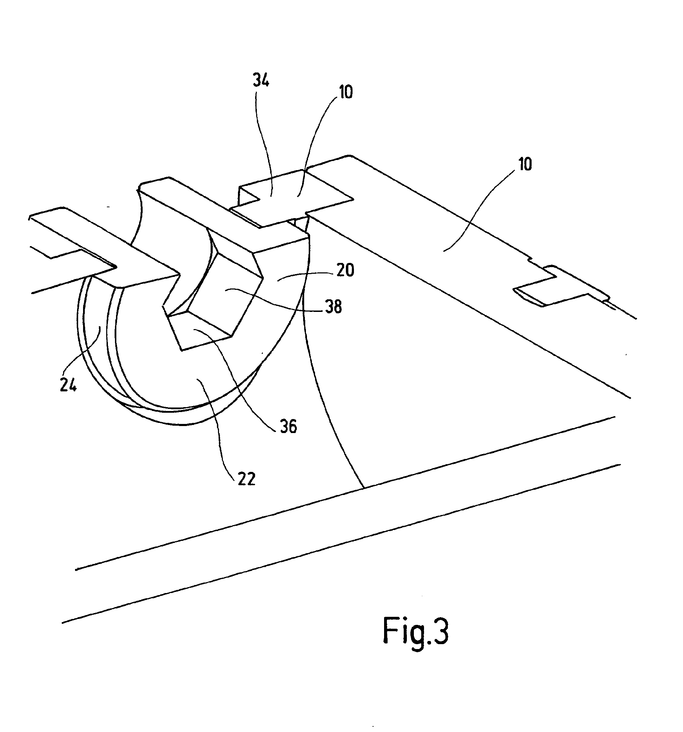

Die Filterkammern 10 können rotationssymmetrische Hohlzylinder sein, aber auch einen rechteckförmigen Kastenaufbau haben. Jedenfalls ist die als Abstandshalter 20 dienende Hohlschraube 22 (vgl. Fig.1) in einer Seitenwand 34 der jeweiligen Fluidkammer 10 geführt, wobei die Hohlschraube 22 die angesprochene Seitenwand 34 durchdringt und gegenüber dieser abgedichtet ist, um dergestalt die Umschalteinrichtung 16 an der Filterkammer 10 unmittelbar festzulegen. Des weiteren weist die Hohlschraube 22 eine Passage 36 für den Durchfluß und die Führung des Fluids auf. Die Passage 36 im Inneren der jeweiligen Hohlschraube 22 ist zum Inneren der Filterkammer 10 zu von einem Innensechskant 38 (vgl. Fig.3) begrenzt, was das Eindrehen oder Einschrauben der Hohlschraube 22 in ein Gewindestück 40 der Umschalteinrichtung 16 erlaubt.

Die angesprochenen Hohlschrauben 22 sind im Bereich einer jeden Filterkammer an deren Enden angeordnet, wobei die Längsachsen der Passagen 36 quer zur Längsrichtung der Filterelemente 14 verlaufen und deckungsgleich mit der Mitte eines jeweils zugeordneten Kugelhahnes 42 der Umschalteinrichtung 16 sind. Die beiden einander gegenüberliegend angeordneten Kugelhähne 42 einer jeden Filtervorrichtung sind über ein Mittengestänge 44 miteinander verbunden und über dieses, beispielsweise von Hand, betätigbar. Das dahingehende Mittengestänge 44 erstreckt sich zwischen den beiden einander zugewandten Seitenwänden 34 der beiden Filterkammern 10 einer Filtervorrichtung.

Die jeweiligen Kugelhähne 42, die in Serie in großer Stückzahl herstellbar sind und die ein Serienbauteil darstellen, sind von einem standardisierten Gehäuse 46 der Umschalteinrichtung 16 aufgenommen. Die dahingehende Aufnahme ist gegenüber der Umgebung fluiddicht über entsprechende Dichteinrichtungen in Form von Dichtringen od.dgl. ausgeführt. Über den freien Raum eines jeden Kugelhahnes 42 läßt sich eine fluidführende Verbindung mit der zugeordneten Filterkammer 10 herstellen, wobei über das Mittengestänge 44 eine synchrone Drehung der Kugelhähne 42 erfolgt. Der dahingehende Funktionsablauf ist bei Doppelfiltern bekannt, so daß hierauf an dieser Stelle nicht mehr näher eingegangen wird.

Die angesprochenen Elementaufnahmen 12 unterteilen die jeweilige Filterkammer 10 in zwei Fluidkammern 48,50, wobei die jeweilige Elementaufnahme 12 mittig in Form einer Bohrung od.dgl. eine fluiddurchlässige Aufnahme 52 für das Filterelement 14 aufweist. Die jeweilige fluiddurchlässige Aufnahme 52 ist in der Art einer Buchse in die Elementaufnahme 12 eingesetzt und verfügt in ihrem Inneren über einen für das Fluid strömungsgünstigen Querschnitt. An ihrem einen Ende schließt die Aufnahme 52 bündig mit der Unterseite der Elementaufnahme 12 ab, die in der Art einer Einschubplatte ausgebildet ist, und hat an ihrem anderen gegenüberliegenden Ende einen Überstand gegenüber der angesprochenen Elementaufnahme 12. Der dahingehende Überstand dient dazu, das Filterelement 14 an seinem einen freien Ende aufzunehmen und radial zu fixieren, wobei das Stützrohr 54 zusammen mit der Elementkappe 56 die Aufnahme 52 bündig übergreift. Zwischen den beiden Elementkappen 56, die das jeweilige Filterelement 14 endseitig abschließen, erstreckt sich die aufgefaltete Filtermatte 58, die um das Stützrohr 54 herumgelegt ist und die der Filterung des zu filtrierenden Fluids dient.

Bei der vorstehend beschriebenen Ausführungsform bildet die Elementaufnahme 12 eine Art Zwischenboden aus, der gegen den am Filterelement 14 anstehenden Differenzdruck während des Filtrierbetriebes durch Klemmung auf einer Seite mittels der beschriebenen Hohlschraube 22 innerhalb der Filterkammer 10 arretiert wird. Eine damit einhergehende geringe Verkantung des Zwischenbodens in Form der Elementaufnahme 12 ist gewollt, so daß keine weitere Arretierung notwendig wird.

Die Ausführungsform nach der Fig.2 wird nur noch insofern erläutert, als sie sich wesentlich von der vorstehend beschriebenen ersten Ausführungsform unterscheidet, wobei für dieselben Bauteile dieselben Bezugszeichen Verwendung finden.

Bei der Ausführungsform nach der Fig.2 finden als Abstandshalter 20 zylindrische, massive Haltestäbe 26 Verwendung, die unter Freilassen der fluiddurchlässigen Aufnahme 52 um diese herumgruppiert sind in der Art eines Käfigs. Die angesprochenen Haltestäbe 26 sind gleich lang ausgebildet und stützen mit ihrem einen freien Ende die Elementaufnahme 12 ab. Mit ihrem anderen Ende sind die Haltestäbe 26, wie dargestellt, in das untere Bodenteil 28 der Filterkammer 10 eingeschraubt. Der nunmehr im Filtrierbetrieb auftretende Differenzdruck beaufschlagt die als Zwischenboden ausgebildete Elementaufnahme 12 und drückt diese gegen die Haltestäbe 26. Mithin ist es bei dieser Lösung nicht zwingend notwendig, wie vorstehend beschrieben, Anschläge im Inneren der Filterkammer 10 auszubilden. Ansonsten dienen bei der vorliegenden Ausführungsform wiederum die vier Hohlschrauben 22 dazu, die Umschalteinrichtung 16 an den Filterkammern 10 festzulegen. In einem dahingehenden Fall wird die jeweilige Hohlschraube 22 unter Ausbildung eines Abstandes zwischen ihrem Kopf und einer Ausnehmung in der Seitenwand 34 in diese bündig eingesetzt. In einem dahingehenden Fall kann der Schraubenkopf auch aus einem üblichen Sechs- oder Mehrkant gebildet sein, da das Festlegen wiederum über die Innensechskantausnehmung erfolgt.

Wie die Figuren zeigen, sind alle Komponenten der Filtervorrichtung im wesentlichen als Gleichteile ausgebildet und ein weitgehend symmetrischer Aufbau für die Vorrichtung ist erreicht. Für einen Filterelement-Wechsel der Filterelemente 14 kann der obere Deckel der Filterkammer abgenommen werden und das Filterelement 14 wird von der buchsenartigen Aufnahme 52 abgezogen und gegen ein neues ersetzt, das dahingehend auf die Aufnahme 52 aufzustecken ist. Der dahingehende Austausch geht einfach vonstatten, wobei nur einige Schraubverbindungen für einen Wechsel gelöst werden müssen. Die Schraubverbindungen 18 an den Bodenteilen einer jeden Filterkammer 10 sind diametral einander gegenüberliegend mehrfach vorhanden. Bei einer nicht näher dargestellten Ausführungsform können auch verschiedene Arten von Abstandshaltern 20 für die Filtervorrichtung nach Filterkammern 10 getrennt eingesetzt werden. Die beschriebenen Lösungen sind ausgesprochen wirtschaftlich in beliebigen Stückzahlen herstellbar und an Kundenwünsche anpaßbar.

## Patentansprüche

1. Filtervorrichtung mit mindestens zwei Filterkamfnern (10), die jeweils in einer Elementaufnahme (12) aufgenommen ein Filterelement (14) aufweisen und mit einer Umschalteinrichtung (16) zum wahlweisen fluidführenden Verbinden und Trennen der Filterkammern (10), wobei die Komponenten der Filterkammern (10) und der Umschalteinrichtung (16) mittels Schraubverbindungen (18) zusammengesetzt sind und wobei die jeweilige Elementaufnahme (12) über Abstandshalter (20) innerhalb der zugeordneten Filterkammer (10) festgelegt ist, **dadurch gekennzeichnet, daß** die Elementaufnahme (12) in der Art einer Einschubplatte als Zwischenboden ausgebildet ist, der gegen den am Filterelement (14) anstehenden Differenzdruck während des Filtrierbetriebes durch Klemmung auf einer Seite mittels des Abstandshalters (20) innerhalb der Filterkammer (10) arretiert ist oder der gegen den Abstandshalter (20) gedrückt ist.

2. Filtervorrichtung nach Anspruch 1, **dadurch gekennzeichnet, daß** der Abstandshalter (20) aus einer Hohlschraube (22) mit zylindrischem Schraubenkopf (24) oder mindestens aus einem Haltestab (26) gebildet ist, die mit Teilen (28) der Filterkammer (10) verbunden sind.

3. Filtervorrichtung nach Anspruch 2, **dadurch gekennzeichnet, daß** die Hohlschraube (22) in einer Seitenwand (34) der Fluidkammer (10) geführt die Umschalteinrichtung (16) an der Filterkammer (10) festlegt und eine Passage (36) für die Fluidführung aufweist.

4. Filtervorrichtung nach einem der Ansprüche 1 bis 3, **dadurch gekennzeichnet, daß** die Elementaufnahme (12) die jeweilige Filterkammer (10) in zwei Fluidkammern (48,50) unterteilt und eine fluiddurchlässige Aufnahme (52) für das Filterelement (14) aufweist.

5. Filtervorrichtung nach Anspruch 4, **dadurch gekennzeichnet, daß** in jeder Teilkammer (48,50) einer jeden Filterkammer (10) mindestens eine Hohlschraube (22) zum Festlegen der Umschalteinrichtung (16) angeordnet ist.

6. Filtervorrichtung nach Anspruch 4, **dadurch gekennzeichnet, daß** in der Teilkammer (48,50) ohne das Filterelement (14) und unter Freilassen der fluiddurchlässigen Aufnahme (52) um diese herum gruppiert in der Art eines Käfigs mehrere Haltestäbe (26) angeordnet sind.

7. Filtervorrichtung nach Anspruch 6, **dadurch gekennzeichnet, daß** die Haltestäbe (26) mit dem Boden der jeweiligen Filterkammer (10) verschraubt sind und daß die Elementaufnahme (12) sich am freien Ende der Haltestäbe (26) abstützt.

8. Filtervorrichtung nach einem der Ansprüche 1 bis 7, **dadurch gekennzeichnet, daß** alle ihre Komponenten im wesentlichen als Gleichteile ausgebildet sind und ein weitgehend symmetrischer Aufbau für die Vorrichtung erreicht ist.

9. Filtervorrichtung nach einem der Ansprüche 1 bis 8, **dadurch gekennzeichnet, daß** verschiedene Arten an Abstandshaltern (20) für eine Filtervorrichtung eingesetzt sind.

## Claims

1. Filter apparatus with at least two filter chambers (10), each comprising a filter element (14) received in an element take-up (12), and with a switching means (16) for selective fluid conveying connecting and separating of the filter chambers (10), whereby the components of the filter chambers (10) and the switching means (16) are assembled by means of screw connections (18), and whereby the relevant element take-up (12) is affixed inside the associated filter chamber (10) by means of distancers (20), **characterised in that** the element take-up (12) takes the form of an interim floor in the way of an insertable plate that is arrested within the filter chamber (10) against the differential pressure acting against the filter element (14) during the operation of the filter by clamping on one side with the distancer (20), or pressed against the distancer (20).

2. Filter apparatus according to Claim 1, **characterised in that** the distancer (20) consists of a hollow screw (22) with a cylindrical screw head (24) or at least of a holding pin (26) that is connected with sections (28) of the filter chamber (10).

3. Filter apparatus according to Claim 2, **characterised in that** the hollow screw (22) provided in a side wall (34) of the fluid chamber (10) affixes the switching means (16) to the filter chamber (10) and comprises a passage (36) for conveying fluid.

4. Filter apparatus according to one of the Claims 1 to 3, **characterised in that** the element take-up (12) divides the relevant filter chamber (10) into two fluid chambers (48, 50) and a fluid permeable take-up (52) for the filter element (14).

5. Filter apparatus according to Claim 4, **characterised in that** at least one hollow screw (22) for affixing the switching means (16) is located in each part chamber (48, 50) of each filter chamber (10).

6. Filter apparatus according to Claim 4, **characterised in that** several holding pins (26) are grouped around the fluid permeable take-up (52) in the part chamber (48, 50) without the filter element (14) and whilst leaving the former free in the manner of a cage.

7. Filter apparatus according to Claim 6, **characterised in that** the holding pins (26) are screwed into the floor of the relevant filter chamber (10), and **in that** the element take-up (12) is supported by the free end of the holding pins (26).

8. Filter apparatus according to one of the Claims 1 to 7, **characterised in that** all its components are substantially identical, and **in that** a symmetrical construction is realised for the apparatus.

9. Filter apparatus according to one of the Claims 1 to 8, **characterised in that** different types of distancers (20) are used for one filter apparatus.

## Revendications

1. Dispositif de filtration ayant au moins deux chambres (10) de filtration qui ont, respectivement, un élément (14) filtrant reçu dans un logement (12) d'élément et au moins un dispositif (16) d'inversion pour relier de manière à conduire les fluides et séparer à volonté les chambres (10) de filtration, les composants des chambres (10) de filtration et du dispositif (16) d'inversion étant assemblés au moyen de raccords (18) vissés et les logements (12) d'élément respectifs étant fixés par des entretoises (20) à l'intérieur des chambres (10) de filtration associées, **caractérisé en ce que** le logement (12) d'élément est constitué à la façon d'une plaque d'insertion en plateau intermédiaire, qui est bloquée à l'encontre de la différence de pression s'appliquant à l'élément (14) filtrant pendant le fonctionnement du filtre par serrage d'un côté au moyen de l'entretoise (20) dans la chambre (10) de filtration ou est repoussée sur l'entretoise (20).

2. Dispositif de filtration suivant la revendication 1, **caractérisé en ce que** l'entretoise (20) est formée d'une vis (22) creuse, à tête (24) de vis cylindrique, ou d'au moins un barreau (26) de maintien qui est assemblé à des parties (28) de la chambre (10) de filtration.

3. Dispositif de filtration suivant la revendication 2, **caractérisé en ce que** la vis (22) creuse, guidée dans une paroi (34) latérale de la chambre (10) à fluide, fixe le dispositif (16) d'inversion sur la chambre (10) de filtration et a un passage (36) pour le passage du fluide.

4. Dispositif de filtration suivant l'une des revendications 1 à 3, **caractérisé en ce que** le logement (12) de l'élément subdivise la chambre (10) de filtration respective en deux chambres (48, 50) de fluide et a un logement (52) perméable au fluide pour l'élément (14) filtrant.

5. Dispositif de filtration suivant la revendication 4, **caractérisé en ce que** dans chaque sous-chambre (48, 50) de chaque chambre (10) de filtration est disposée au moins une vis (22) creuse pour la fixation du dispositif (16) d'inversion.

6. Dispositif de filtration suivant la revendication 4, **caractérisé en ce qu'**il est monté dans les sous-chambres (48, 50) sans l'élément (14) filtrant et en laissant libre le logement (52) perméable au fluide, groupés autour de ce dernier à la manière d'une cage plusieurs barreaux (26) de maintien.

7. Dispositif de filtration suivant la revendication 6, **caractérisé en ce que** les barreaux (26) de maintien sont vissées au fond de la chambre (10) de filtration respective et **en ce que** le logement (12) de l'élément s'appuie à l'extrémité libre des barreaux (26) de maintien.

8. Dispositif de filtration suivant l'une des revendications 1 à 7, **caractérisé en ce que** tous ces composants sont constitués sensiblement sous la forme de parties identiques et qu'il est obtenu une structure pour une grande partie symétrique du dispositif.

9. Dispositif de filtration suivant l'une des revendications 1 à 8, **caractérisé en ce qu'**il est utilisé différents types d'entretoises (20) pour un dispositif de filtration.
